# EUROPEAN PATENT SPECIFICATION

(11) **EP 2 260 939 B1**
(45) Date of publication and mention of the grant of the patent: **27.05.2020**
(21) Application number: 09170707.5
(22) Date of filing: 18.09.2009
(51) Int. Cl.: B01J 23/28, B01J 23/42, B01J 23/46, B01J 23/75, B01J 23/755, B01J 37/06, B01J 37/34, B01J 21/18, B01J 37/00

(54) **Carbon nanotube catalysts having metal catalyst nano-particles supported on the inner channel of the carbon nanotubes only and preparation method thereof**
Kohlenstoffnanorohr-Katalysatoren mit Metallkatalysator-Nanopartikeln, die nur im inneren Kanal des Kohlenstoffnanorohrs gestützt werden und Herstellungsverfahren dafür
Catalyseurs en nanotubes de carbone dotés de nanoparticules de catalyseur métalliques situées uniquement dans le canal interne du nanotube de carbone et leur procédé de préparation

(30) Priority: 20.05.2009 KR 20090044041
(43) Date of publication of application: 15.12.2010
(73) Proprietor: Korea Institute of Energy Research, Daejeon 305-343 (KR)
(72) Inventor: Kim, Hee Yeon, Daejeon (KR); Jeong, Nam Jo, Daejeon (KR)
(74) Representative: Plasseraud IP

(56) References cited:
- EP-A1- 1 964 812
- EP-A1- 2 037 517
- EP-A1- 2 077 151
- WO-A2-2007/149109

## Description

### BACKGROUND OF THE INVENTION

### Field of the Invention

The present invention relates to a carbon nanotube catalyst having metal catalyst nanoparticles supported thereon, which has improved catalyst durability and selective catalyst activity by supporting metal catalyst nanoparticles only on the inner channel surface of a carbon nanotube in a highly dispersed state, and to a method for preparing the same.

### Background of the Related Art

Carbon nanotubes are considered as a promising new material for the use as a catalyst support, due to their intrinsically excellent electroconductivity, specific surface area, hydrogen storage and physical/chemical durability superior to other carbon-based materials. Carbon nanotubes are preferably used as a fuel cell catalyst by supporting various species of metal catalysts such as platinum, nickel and ruthenium thereon. Such catalyst is expected to have an effective use in various catalytic reactions such as hydrogenation and dehydrogenation, reforming reactions and desulfurization, demetalization, and denitrification. Since carbon nanotubes have a unique surface structure, when supporting metal catalyst particles thereon, cohesion among particles can be avoided advantageously. To date, however most of researches on carbon nanotubes have been focused on their synthesis, and studies on application of carbon nanotubes as a catalyst support have been made little.

Investigating a recent trend of catalyst studies, it can be classified into two big categories: one is synthesis of a novel support material which has a large surface area and a pore structure suitable for each specific catalyst reaction; and the other is nano-scale production of catalyst particles by developing a novel method for catalyst preparation. With respect to the production of nano-sized metal catalysts, particularly in case of precious metal catalysts, the recent surge in the cost has demanded the development of a technology which can improve the catalyst performance, while reducing the amount of use, by making the particles nano-sized and highly dispersed. For example, a platinum catalyst, one of precious metals, has a wide use in various hydrogenation or reforming reactions, showing superior activity to other metal catalysts. However, its use has been quite limited owing to the high production cost. For solving this problem, it is important to use the minimum amount of platinum, while maximizing the catalyst active sites, by minimizing the particle size of catalytically-active platinum to a nano-size and supporting the nano-sized particles in a highly dispersed state. For achieving this, the surface area of a catalyst support should be large, and catalyst particles should not cohere on the surface of a catalyst support during a supporting process. Further, it is also important to minimize durability deterioration, caused by detachment of metal catalysts from the surface of a catalyst support.

If metal catalyst components are only selectively supported into the pores of a carbon support or on the inside channel of a carbon nanotube, it is possible to significantly reduce detachment of catalyst particles from the support as reaction proceeds, thereby minimizing durability deterioration. However, by conventional catalyst preparation methods such as impregnation or precipitation used in some previous studies, it is difficult to support the catalyst particles on the inside of the channel of a carbon nanotube in uniform way. The diameter of the inner channel of a carbon nanotube is generally very small on the order of 3-10 nm. Through such small channel, it is difficult to introduce catalyst particles owing to the surface tension of an aqueous solution in which metal precursors are dissolved.

In order to solve these problems of prior arts, the present inventors have developed a carbon nanotube catalyst by: using a carbon nanotube as a catalyst support, wherein the carbon nanotube has a excellent physical properties and has been expected to be a promising material for the use as a catalyst support; carrying out a specific pretreatment to form defects on the inner channel surface of the carbon nanotube for using the inner channel of the carbon nanotube as a catalyst reactor; and then supporting the metal catalyst nanoparticles only on the inner channel surface of the carbon nanotube by chemical vapor deposition (CVD), resulting in carbon nanotube catalyst. By such method, the present inventors have found that it is possible to solve the durability problem which is caused by detachment of metal catalysts from the surface of the catalyst support upon use of catalyst, and that, it is also advantageous in obtaining a reaction product with good selectivity, when only one type of product is needed to be obtained in selective way among various reaction products (i.e. isomers) in isomerization, among various catalyst reactions. Based on the above findings, the present inventors completed the present invention.

### SUMMARY OF THE INVENTION

An object of the present invention is to provide a high performance carbon nanotube catalyst having metal catalyst nanoparticles supported thereon, which can be applied to various catalyst reactions, by supporting metal catalyst nanoparticles only on the inner channel of a carbon nanotube through a specific pretreatment for using the inner channel as a catalyst reactor, and a method for preparing the same.

The inventive carbon nanotube catalyst can dramatically reduce the durability problem, i.e. detachment of metal components from a catalyst support upon repeated use as time passes and has excellent selectivity to a certain product from reactions such as isomerization, and a method for preparing the same.

### BRIEF DESCRIPTION OF THE DRAWINGS

In the drawings:
FIG.1 is a graph showing the result of chemical adsorption test of CO (carbon monoxide), using Pt catalyst nanoparticle-supported carbon nanotube catalysts prepared from example 1 and comparative examples 1 and 2, and CO as a probe molecule;
FIG.2 shows TEM (transmission electron microscope) views of each carbon nanotube to which different pretreatment time is applied in step (1) of example 1: (a) is obtained from a carbon nanotube before a mixed acid treatment; (b) is obtained after standing time of a 30 minutes; (c) is obtained after standing time of 90 minutes; (d) is obtained after standing time of 240 minutes; and (e) is obtained after standing time of 480 minutes;
FIG.3 shows TEM micrographs of Pt catalyst nanoparticle-supported carbon nanotube catalyst prepared from example 1;
FIG.4 shows a TEM micrograph of Pt catalyst nanoparticle-supported carbon nanotube catalyst prepared from example 2;
FIG.5 is a graph showing the reaction conversion rate in hydrogenation of tetralin by using a carbon nanotube catalyst prepared from example 1 and comparative examples 1 and 2, respectively, as a function of reaction time (hour);
FIG.6 is a graph showing the selectivity to a reaction product from hydrogenation of tetralin by using a carbon nanotube catalyst prepared from example 1 and comparative examples 1 and 2, respectively, as a function of tetralin reaction conversion rate (%);
FIG.7 is a graph comparing long-term durability of carbon nanotube catalysts prepared from example 1 and comparative example 2, respectively, as a function of time, by testin in hydrogenation of benzene;
FIG.8 is a schematic view illustrating a chemical vapor deposition (CVD) device which is used for supporting Pt nanoparticles on the inner channel of a carbon nanotube; and
FIG.9 is a schematic view illustrating an evaporator which is used for evaporating Pt precursors in example 1.

### DETAILED DESCRIPTION OF THE INVENTION

In order to achieve the foregoing objects, the present invention provides a method for preparing a carbon nanotube catalyst, as defined in claim 1.

Further, the present invention provides a carbon nanotube catalyst having metal catalyst nanoparticles supported only on the inner channel of the carbon nanotube catalyst, which contains a carbon nanotube which is pre-treated so that metal catalyst nanoparticles may be supported only on the inner channel surface of the carbon nanotube by CVD.

Hereinafter, a method for preparing a carbon nanotube catalyst having metal catalyst nanoparticles supported on the inner channel of the carbon nanotube catalyst, according to the present invention will be further specifically described step by step.

In the step 1, a carbon nanotube is heated so as to remove carbon impurities and then treated with hydrochloric acid so as to remove metal catalyst components. A carbon nanotube is heated to remove carbon impurities, i.e. amorphous carbon particles therefrom. The heating process is carried out in an oven heated to 450∼550°C under air atmosphere for 30 minutes to 2 hours. Next, the carbon nanotube is treated with hydrochloric acid so as to remove metal components such as nickel, cobalt, iron or mixtures thereof, which were used as a catalyst in preparation of the carbon nanotube to be used as a catalyst support. The carbon nanotube free of carbon impurities, obtained from the heating process, is immersed in hydrochloric acid (6-10 mol), maintained therein for 6∼24 hours, then washed with distilled water and dried in an oven at the temperature of 100∼120°C for 12 to 24 hours. When the oven temperature is less than 100°C, moisture is hardly removed. When it is more than 120°C, it may cause structural changes in a carbon nanotube. This process is repeated until the hydrochloric acid collected after treating the carbon nanotube becomes to have no color.

In the step 2, the hydrochloric acid-treated carbon nanotube from the step 1 is immersed in a mixed acid solution and sonicated. In order to improve wettability, to substitute oxidative groups and to form defects, on the inner channel surface of a carbon nanotube, the carbon nanotube is immersed in a mixed acid solution in which 14M nitric acid and 98% sulfuric acid are mixed at the mixing ratio of 1:1 by volume, and sonicated for 3-10 minutes. When the mixing ratio of nitric acid to sulfuric acid in a mixed acid solution is 1:1 by volume, the treatment results in the best effect. When the concentration of a mixed acid solution is less than the above-mentioned ratio, it results in poor effect. To the contrary, when the concentration of a mixed acid solution is higher than the above-mentioned ratio, it may cause serious corrosion at the surface of the carbon nanotube. Through the treatment with such mixed acid solution, a mixed acid solution is introduced into a carbon nanotube, reaching to the inner channel surface thereof, improving wettability of the inner channel surface of the carbon nanotube, substituting oxidative groups and forming some defects thereon.

It is nearly impossible to support catalysts on the inner channel of a carbon nanotube by using a conventional impregnation method which is generally used for catalyst preparation. Since the inner channel diameter of a general multi-walled carbon nanotube is as small as several nm, an aqueous solution of precursors which has a large surface tension cannot be easily introduced into the carbon nanotube. Further, owing to the hydrophobic nature of carbon nanotube, metal precursors are hardly supported on the surface thereof. Therefore, the present invention is featured by the pretreatment of a carbon nanotube in step 2, which promotes introduction of an aqueous solution into the inner channel of a carbon nanotube through the mixed acid treatment and sonication. The aqueous solution once introduced into a carbon nanotube would not be washed off during a washing process of the outer surface of a carbon nanotube. Therefore, this pretreatment is effective in treating only the inner surface.

In the step 3, the sonicated carbon nanotube from step 2 is washed, left standing, and vacuum-dried.

After sonication, the surface of the carbon nanotube is washed several times with distilled water under atmospheric pressure and filtered. Then, the resulted product is left standing at ambient temperature for 30∼360 minutes. During the process, the mixed acid solution hardly comes out of the inner channel of the carbon nanotube by such washing under atmospheric pressure owing to capillary action. Therefore it generates functional groups on the surface, while being filled in the inside of the channel. In other words, surface treatment is effected only on the inner surface, not on the outer surface of the carbon nanotube. In this treatment, the inner channel diameter of a carbon nanotube is suitably 15 nm or more. When the diameter is less than 15 nm, capillary action is not likely to occur.

The carbon nanotube containing a mixed acid solution obtained after the sonication process, is left standing at ambient temperature for 30∼360 minutes. When standing time is more than 360 minutes, the carbon nanotube surface may be seriously modified.

After leaving the sonicated-carbon nanotube standing, vacuum drying is carried out to remove the mixed acid solution filled inside the carbon nanotube. Vacuum drying in the step 3 is performed in an oven at the temperature of 100∼120°C for 30 minutes to 2 hours. Through such process, defects can be effectively formed on the inner channel surface of a carbon nanotube.

The step 3 is a key process that makes it possible to support metal catalyst nanoparticles only on the inner channel surface of a carbon nanotube by washing the sonicated carbon nanotube, leaving it standing and vacuum drying under the above-described conditions.

In the step 4, while feeding a flow of metal precursors into the vacuum dried-carbon nanotube from the step 3, metal catalyst nanoparticles are supported on the inner channel of the carbon nanotube by CVD.

It is difficult to achieve effective supporting of metal catalyst nanoparticles only on the inner channel surface of a carbon nanotube by using a generally-used impregnation method, therefore other specific method is needed to be applied. In the present invention, by using CVD, metal catalyst nanoparticles can be supported on the inner channel of a carbon nanotube.

The metal catalyst nanoparticles supported on the inner channel of the carbon nanotube pretreated from the steps 1 to 3 may include nanoparticles of platinum (Pt), ruthenium (Ru), nickel (Ni), cobalt (Co) or molybdenum (Mo). In order to support such nanoparticles of Pt, Ru, Ni, Co or Mo on the inner channel of a carbon nanotube, while feeding a flow of metal precursors, CVD is used to support the above-listed metal catalyst nanoparticles on the inner channel of a carbon nanotube. As for the metal precursors, the followings may be used: for platinum, methyltrimethylcyclopentadienyl-platinum (MeCpPtMe3) Pt(Me)₃(Cp), Pt(Tfacac)2, Pt(Me)(CO)(Cp), Pt(Me)₂(COD), [PtMe₃(acac)]₂ (acac; acetylacetonato ligand), PtCl₂(CO)₂, Pt(PF₃)₄, Pt(acac)₂, Pt(C₂H₄)₃ and the like; for ruthenium, ruthenium acetylacetonate (Ru(acac)₃) or ruthenium carbonyl (Ru(CO)₅); for nickel, nickel nitrate (Ni(NO₃)₂) or nickel carbonyl (Ni(CO)₄); for cobalt, Co(CO)₃NO and the like; for molybdenum, MO(CO)₆ and the like.

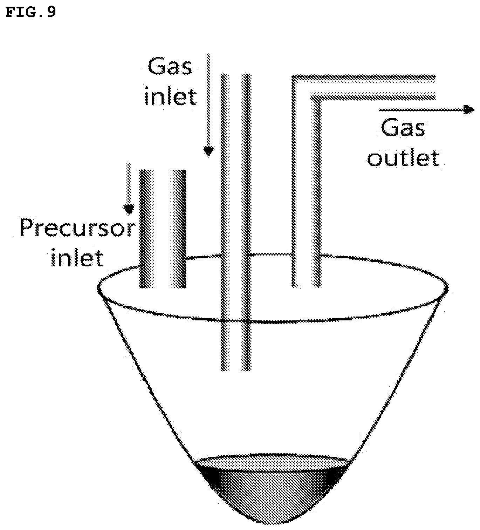

In one embodiment of the present invention, a method of supporting metal catalyst nanoparticles on the inner channel of a carbon nanotube by using CVD while feeding a flow of metal precursors into the carbon nanotube may be carried out as described below. Firstly, the carbon nanotube of which inside is treated through the steps 1 to 3 is placed in the center of a quartz tube. The temperature inside the quartz tube is maintained in the range of 100∼120°C under the pressure of 6-10 Torr for 30∼120 minutes or more so as to remove impurities inside the quartz tube and to create vacuum conditions inside the reactor where the carbon nanotube is placed. Subsequently, metal precursors which are in vaporized state by heating in advance, are fed into the quartz tube in vacuum condition, thereby supporting the metal catalysts on the surface of the carbon nanotube. For vaporization of the metal precursors, they are placed in an evaporator as illustrated in FIG.9, and the temperature of the vessel is raised to the boiling point of the metal precursors so as to effect vaporization. When carrying out CVD, by opening a cock valve between an evaporator and a quartz tube (reactor), metal precursors are delivered from the evaporator which is under ambient pressure (1 atm) or more due to vaporization of the metal precursors, to the carbon nanotube inside the evaporator which is under vacuum condition. To find the optimum conditions for CVD, a search for optimum conditions should be made in advance by changing the species of carrier gases for feeding the metal precursors and reaction temperature conditions. When repeating the supporting process of metal catalyst nanoparticles several times, while maintaining the vacuum conditions inside the quartz tube, it is possible to increase the amount of metal catalyst nanoparticles supported on the carbon nanotube surface.

Further, the present invention provides a carbon nanotube catalyst having metal catalyst nanoparticles supported only on the inner channel of the carbon nanotube, containing: a carbon nanotube which is pretreated such that metal catalyst nanoparticles can be supported on the inner channel surface of the carbon nanotube; and metal catalyst nanoparticles supported on the inner channel surface of the carbon nanotube by CVD.

The carbon nanotube which is pretreated such that metal catalyst nanoparticles can be supported on the inner channel surface of the carbon is produced with the method as described above.

The carbon nanotube catalyst having metal catalyst nanoparticles supported on the inner channel of the carbon nanotube, according to the present invention is prepared by supporting the metal catalyst nanoparticles only on the inner channel of the carbon nanotube in selective way. When using such catalyst, a reaction occurs only inside the carbon nanotube, therefore durability deterioration which is caused by detachment of metal components from the surface of a catalyst support as reaction proceeds, hardly occurs. Further, it is advantageously used in obtaining a reaction product with excellent selectivity, when it is intended to obtain only one product among various reaction products in selective way particularly from an isomerization reaction among various catalyst reactions.

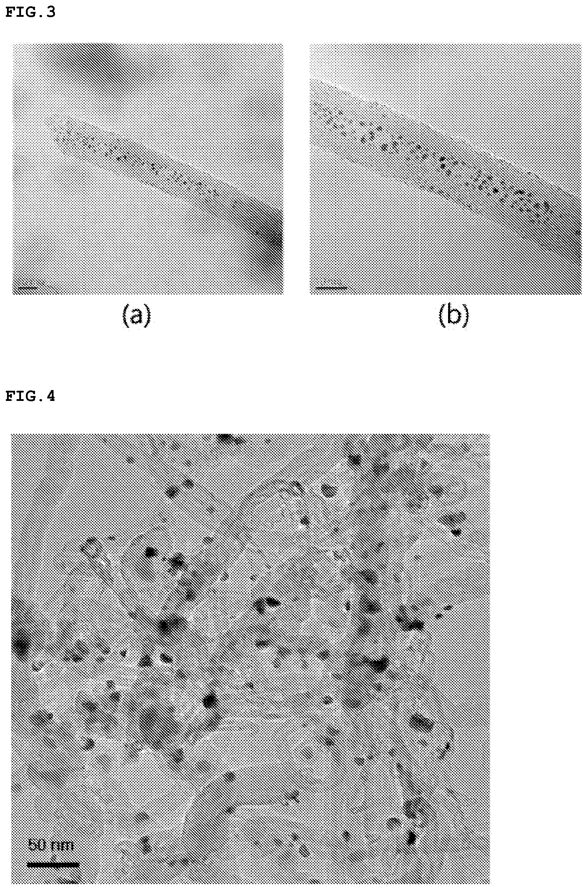

FIG.3 is TEM micrographs of a carbon nanotube catalyst having Pt catalyst nanoparticles supported thereon, prepared by one embodiment of the present invention. As seen from FIG.3, when a carbon nanotube catalyst is prepared according to the present invention, it is prepared such that metal catalyst nanoparticles are supported only on the inner channel of a carbon nanotube. As described above, the carbon nanotube catalyst of the present invention prepared such that the metal catalyst nanoparticles are supported only on the inner channel of the carbon nanotube provides an effect of greatly enhancing the problem of durability deterioration caused by detachment of catalyst upon repeated use, which is a drawback of a supported catalyst on a carbon-based catalyst support. The effect of improvement in catalyst durability of a carbon nanotube catalyst according to the present invention is further illustrated in detail through the test example 5 given below.

A carbon nanotube catalyst having Pt catalyst nanoparticles supported thereon is effectively used in hydrogenation of tetralin or benzene, and oxidation of methanol, ethanol, phenol and the like.

A carbon nanotube catalyst having Ni catalyst nanoparticles, or Mo catalyst nanoparticles supported thereon is very effectively used in desulfurization, denitrification, demetalization and the like.

A carbon nanotube catalyst having Co catalyst nanoparticles supported thereon may be used as: a cocatalyst for desulfurization, denitrification and demetalization; a cocatalyst for Pt catalyst for fuel cell; a catalyst for a Fisher-Tropsch reaction; a catalyst for oxidation and partial oxidation of hydrocarbons; a catalyst for reforming reactions; a catalyst for amination of ethanol; a catalyst for hydrogenation and water gas shift reaction, and the like.

A carbon nanotube catalyst having ruthenium catalysts supported thereon may be used in an ethanol producing reaction through hydrogenation of CO.

### Advantageous effects

The present invention can provide a carbon nanotube catalyst having metal catalyst nanoparticles supported thereon, which has improved durability and selective catalyst activity by supporting metal catalyst nanoparticles only on the inner channel of a carbon nanotube, and a method for preparing the same.

In other words, the present invention provides a carbon nanotube catalyst having metal catalyst nanoparticles supported thereon, wherein the carbon nanotube catalyst can considerably reduce durability deterioration, i.e. detachment of metal components upon repeated use, that is a common problem occurred in general carbon-based catalyst supports, and has excellent selectivity to a certain reaction product from reactions such as isomerization, by supporting metal catalyst nanoparticles only on the inner channel of a carbon nanotube.

### DETAILED DESCRIPTION OF THE PREFERRED EMBODIMENT

Hereinafter, the preferred examples of the present invention are illustrated for better understanding of the present invention. To those ordinarily skilled in the art, it will be apparent that these examples are provided for only exemplary purpose.

### EXAMPLES

### Example 1: Preparation of a carbon nanotube catalyst having Pt catalyst nanoparticles supported on the inner channel of a carbon nanotube

### (1) Pretreatment of inner channel surface of a carbon nanotube

A carbon nanotube was heated to remove carbon impurities, i.e. amorphous carbon particles therefrom, in an oven heated to 450∼550°C under air atmosphere for 30 minutes to 2 hours. Next, it was treated with hydrochloric acid so as to remove metal components such as nickel, cobalt, iron or mixtures thereof, which were used as a catalyst in preparation of the carbon nanotube to be used as a catalyst support. Specifically, the carbon nanotube was immersed in hydrochloric acid (6-10 mol), maintained therein for 6∼24 hours, then washed with distilled water and dried in an oven at the temperature of 100∼120°C for 12 to 24 hours. This process was repeated until the hydrochloric acid collected after treating the carbon nanotube became colorless. Next, the sample was immersed in a mixed acid solution in which 14M nitric acid and 98% sulfuric acid were mixed at the mixing ratio of 1:1 by volume and sonicated 5 minutes, in order to improve wettability of the inner channel surface, rather than the outer surface of the carbon nanotube, to substitute oxidative groups and to form defects on the surface. After sonication, the surface of the carbon nanotube was washed several times with distilled water, filtered and allowed to stand at room temperature for 60 minutes. For removing the mixed solution filled inside the carbon nanotube, vacuum drying was carried out.

### (2) Supporting of Pt catalyst nanoparticles on the inner channel surface of a carbon nanotube

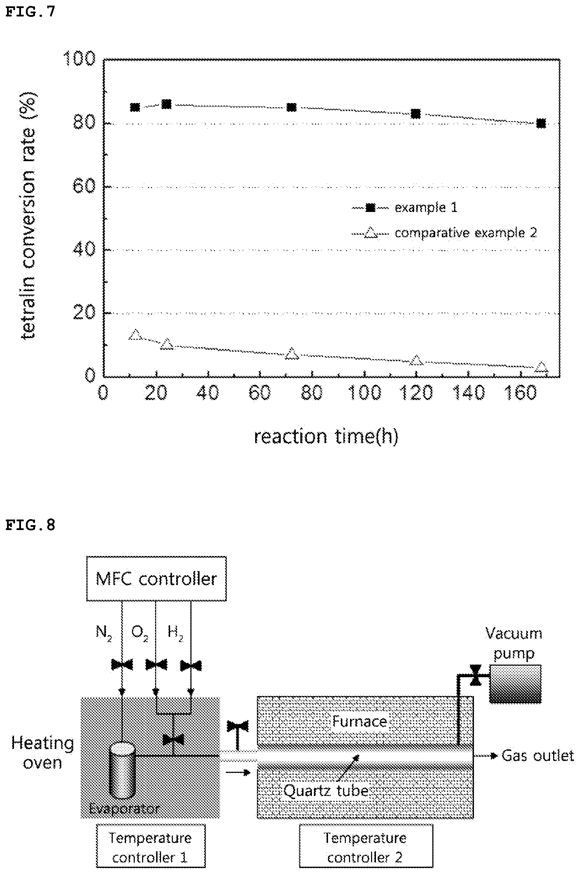

In order to support Pt catalyst nanoparticles only on the inner channel of a carbon nanotube having many defects on the inner surface generated by the above-described pretreatment, a CVD method was used. CVD is a method which makes it possible to deposit nanoparticles at high dispersion rate on the inner channel of a carbon nanotube which has a small diameter, and may be carried out by using a CVD device as shown in FIG.8.

Illustrating the CVD process of Pt particles, the carbon nanotube powder collected from the pretreatment process was contained in a quartz boat, which was then placed in the center of a quartz tube, and the temperature inside the quartz tube was raised to 100∼120°C, while maintaining the pressure at 6∼10 Torr for 120 minutes or more, so as to remove impurities from the inside of the quartz tube as well as to form a vacuum condition inside the reactor where the carbon nanotube sample was placed. Subsequently, a flow of metal precursors which are in vapor phase by previous heating was fed to into the quartz tube, thereby supporting Pt nanoparticles onto the carbon nanotube surface. For the vaporization of Pt precursors, a specially designed evaporator (FIG.9) was filled with a Pt precursor, methyltrimethylcyclopentadienyl platinum (MeCpPtMe₃), and was purged with a nitrogen stream for more than 30 minutes. Then, the temperature inside the sealed vessel was elevated to the boiling point of the precursor, thereby converting the precursor to a vaporized state. The optimum temperature for stable vaporization of Pt precursor was suitably in the range of 50∼60°C. With the start of CVD, a cock valve between the evaporator where Pt precursor was placed and the reactor, i.e. quartz tube where carbon nanotube sample was placed was opened so as to make the Pt precursor vapor delivered to the carbon nanotube. For increasing the amount of Pt precursors being supported, the above-described supporting process was repeated, wherein vaporized precursor was fed in the form of a pulse from an evaporator to a quartz tube, the inside of which was maintained under vacuum condition, resulting in significantly increased amount of Pt catalyst being supported.

### Comparative example 1. Preparation of carbon nanotube catalyst where Pt nanoparticles were supported by an impregnation method

### (1) Pretreatment of inner channel surface of a carbon nanotube

Carbon nanotube was prepared by the pretreatment process same as in the pretreatment of Example 1.

### (2) Supporting of Pt catalyst nanoparticles on the inner channel surface of a carbon nanotube

In order to support Pt catalyst nanoparticles on the inner channel of a carbon nanotube having many defects on the inner surface generated by the above-described pretreatment, an improved impregnation method was used, which was distinguished from conventional impregnation methods by an additional sonication step.

Firstly, chloroplatinic acid(H₂PtCl₆) was used as a Pt precursor, which was dissolved in distilled water to provide an aqueous solution of a Pt precursor. The carbon nanotube as pretreated above was placed in the solution and ultrasonic wave was applied thereto for 30 minutes. The sonication process was repeated 5 times. The sonicated carbon nanotube sample was dried in an oven at 100°C for 12 hours or more, and subsequently fired in atmosphere at 450°C for 4 hours.

### Comparative example 2. Preparation of carbon nanotube catalyst where Pt nanoparticles were supported by an impregnation method

### (1) Pretreatment of inner channel surface of a carbon nanotube

Carbon nanotube was prepared by the pretreatment process same as in the pretreatment of Example 1.

### (2) Supporting of Pt catalyst nanoparticles on the inner channel surface of a carbon nanotube

Chloroplatinic acid(H₂PtCl₆) was used as a Pt precursor, which was dissolved in distilled water to provide an aqueous solution. The carbon nanotube as pretreated above was immersed in the aqueous precursor solution, and ultrasonic wave was applied thereto for 30 minutes. After sonication, it was allowed to stand at room temperature for 12 hours. In this process, sonication was carried out to promote contact between the carbon nanotube surface and the aqueous solution of a Pt precursor, and then the solution was left standing for 12 hours at room temperature so that the precursor was able to be sufficiently impregnated into the carbon nanotube surface. Next, the solution containing the carbon nanotube was filtered, dried in an oven at 110°C for 12 hours, and fired in atmosphere at 450°C for 4 hours.

### Test example 1. Estimation of catalyst active site number

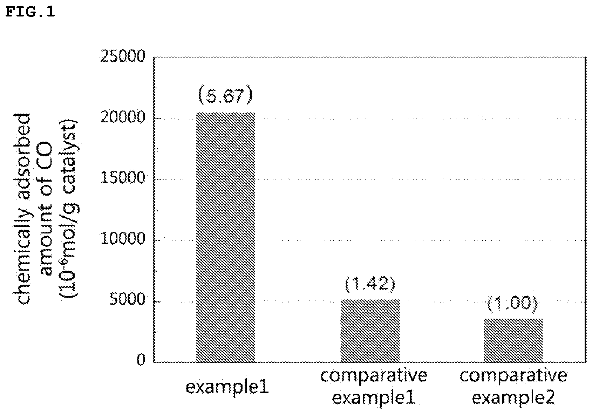

The carbon nanotube catalysts having Pt catalyst nanoparticles finally obtained from example 1 and comparative examples 1 and 2, were subjected to a chemical absorption test of carbon monoxide(CO) by using CO as a probe molecule, wherein CO was selectively adsorbed to Pt catalyst active site. The results were shown in FIG.1. The chemical adsorption test of CO to each catalyst was performed by using pulse technique. Before the test, a hydrogen gas stream was fed to the carbon nanotube catalyst at 450°C for 2 hours so as to conduct the test with the catalyst converted to its reduced state, i.e. metallic phase.

As seen from FIG.1, example 1 exhibited the greatest amount of chemically adsorbed CO, meaning numerous number of catalyst active sites to which CO was able to be adsorbed. It also means that Pt particles were well-supported on the carbon nanotube surface. Comparative examples 1 and 2 showed a significantly small amount of chemically adsorbed CO, as compared to example 1. From the above results, it was confirmed that the carbon nanotube catalyst prepared by using CVD method according to the present invention was effective on increasing the number of catalyst active sites. The distribution of Pt catalyst nanoparticles and the particle size can be confirmed by the TEM results of the following test example 3.

### Test example 2. Shapes of carbon nanotube depending on various pretreatment periods (analysis by TEM observation)

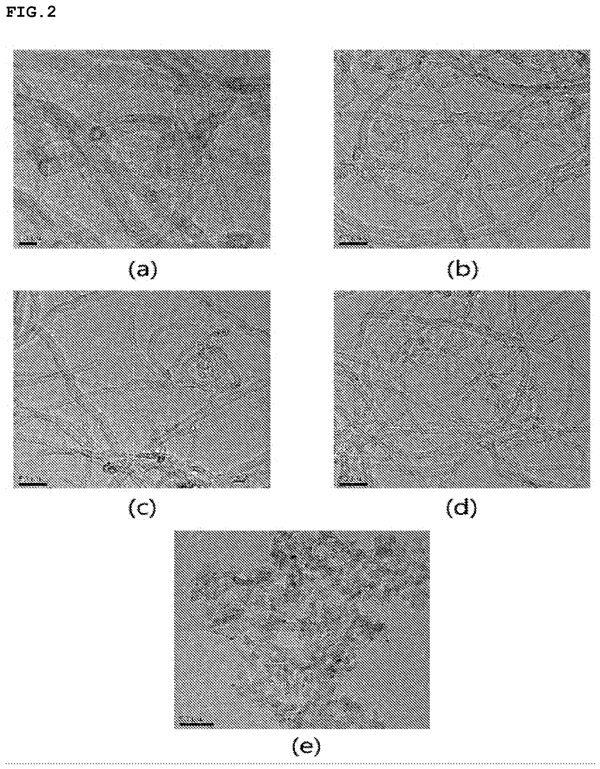

The changes in the carbon nanotube shape depending on changes in time taken for the pretreatment process (step 1) of example 1 were observed by using TEM. The results were shown in FIG.2.

FIG.2 shows the results of microscopic analysis of carbon nanotubes by using TEM, wherein the carbon nanotube was obtained by: sonicating carbon nanotubes for 5 minutes so as to fill their inside with a mixed acid solution; washing the resulted carbon nanotubes with distilled water, filtering and leaving them standing for each different time duration at room temperature; and vacuum drying the resulted carbon nanotubes, in the step (1) of carbon nanotube pretreatment of example 1. FIG.2(a) shows carbon nanotubes before the treatment with a mixed acid solution; FIG.2(b) shows carbon nanotubes left standing for 30 minutes; FIG.2(c) shows those left standing for 90 minutes; FIG.2(d) shows those left standing for 240 minutes; FIG.2(e) shows those left standing for 480 minutes. From seeing FIG.2(a), (b), (c) and (d), it can be found that the longer the standing time, the thinner the wall of carbon nanotubes become. It was not confirmed whether functional groups were generated on the surface by the mixed acid treatment. However, from the result of the decreasing thickness of the carbon nanotube wall, the effect of the mixed acid treatment could be found in indirect way. In case of FIG.2(e) which shows the result obtained after the increased standing time of 480 minutes, significant structural changes in carbon nanotubes were found: self-cut, broken, hence considerably shorten nanotubes. From such result, it can be found out that more than 360 minutes of standing is not suitably applied, since it can cause serious structural changes in carbon nanotubes.

### Test example 3. TEM analysis of carbon nanotube catalyst

Carbon nanotube catalysts having Pt catalyst nanoparticles supported thereon, finally prepared from example 1 and comparative example 2 were investigated and measured by using TEM, and the results were shown in FIGs.3 and 4.

FIG.3 is a TEM micrograph showing a carbon nanotube catalyst having Pt nanoparticles supported thereon, prepared from example 1. As seen from FIG.3, most of Pt catalyst nanoparticles were found to be uniformly distributed throughout the inner channel of the carbon nanotube. The nanoparticles had a particle size as small as 1nm or so and showed a uniform distribution. A small amount of particles can be also found on the outer wall of the carbon nanotube, because some defects may also be produced on the outer channel, not only on the inner channel, during the pretreatment process.

FIG.4 is a TEM micrograph showing carbon nanotube catalysts having Pt catalyst nanoparticles supported thereon, prepared from comparative example 1. As seen from FiG.4, it was confirmed that Pt catalyst nanoparticles were supported on the carbon nanotube surface, having a particle size ranged between at a minimum of 2∼3 nm and at a maximum of 10 nm. As such, the size of Pt catalyst nanoparticles was quite larger and uneven, and also the particle distribution thereof was uneven, as compared to the result of example 1. Longer sonication time or increased number of times of repeating the sonication process may increase the amount of metal catalyst being supported to the carbon nanotube surface, however more than a certain number of times of the supporting process will cause cohesion of Pt catalyst particles, thereby reducing the number of catalyst active sites relative to the supported amount of metal. As seen from the above results, although such impregnation method using ultrasonic waves has some advantages such that the amount of metal catalysts being introduced into the inner channel of a carbon nanotube can be increased, and catalysts having relatively increased amount of deposition can be easily prepared. However, it has disadvantages such that bigger catalyst particles are formed, as compared to example 1 using CVD method.

These results may explain the result of CO adsorption in test example 1. The Pt particles formed on the carbon nanotube surface in example 1 were confirmed to have a very small size and uniform distribution, as compared to comparative examples 1 and 2. Consequently, catalyst active sites to which CO can be adsorbed were formed at the greatest number in example 1, among other examples, leading to such results of test example 1.

### Test example 4. Determination of catalyst activity of carbon nanotubes

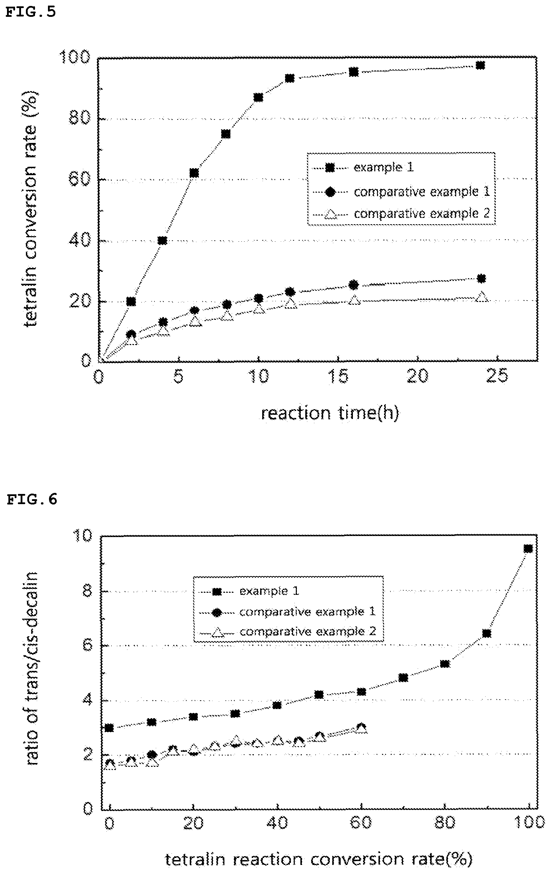

By using carbon nanotube catalysts having Pt catalyst nanoparticles supported thereon, finally prepared from example 1, test examples 1 and 2, hydrogenation of tetralin was carried out, and the reaction conversion rate as a function of time and selectivity to a reaction product were investigated and compared. The results were shown in FIGs. 5 and 6, respectively. Hydrogenation of tetralin was carried out in vapor phase at 275°C under 35 bar in a stainless steel reactor. The composition of reaction products was analyzed by gas chromatography (HP7890).

FIG.5 is a graph showing the reaction conversion rate of tetralin hydrogenation as a function of reaction time, by using carbon nanotube catalysts having Pt catalyst nanoparticles supported thereon, finally prepared from example 1 and comparative examples 1 and 2, respectively. As shown in FIG.5, the highest reaction conversion rate was observed in example 1, while the lowest reaction conversion rate was shown in comparative example 2. It may be attributed to the largest number of catalyst active sites in example 1 among other comparative examples, as it was also confirmed by the result of chemical adsorption of CO in the above test example 1.

FIG.6 is a graph showing selectivity to reaction products from tetralin hydrogenation, as a function of tetralin conversion rate, i.e. a graph comparing the ratio between trans-decalin and cis-decalin, by using carbon nanotube catalysts having Pt catalyst nanoparticles supported thereon, finally prepared from example 1 and comparative examples 1 and 2, respectively. As seen from FIG.6, example 1 wherein most of Pt catalyst nanoparticles were supported on the inner channel of a carbon nanotube, shows relatively high ratio of trans-decalin/cis-decalin, while comparative examples 1 and 2 show relatively small values of ratio. It means that products in the form of trans-decalin were generated much more than those in cis-decalin form which has a relatively bigger particle diameter, because in example 1, most catalyst reactions were occurred inside of the carbon nanotubes. To the contrary, most catalyst particles were present on the outside of the nanotubes in comparative examples 1 and 2, thereby exhibiting smaller ratio of trans-decalin/cis-decalin as compared to example 1.

Consequently, one of great advantages of using such catalyst having catalyst particles supported on the inside of the carbon nanotube, is that a certain isomer type can be selectively obtained.

### Test example 5. Determination of carbon nanotube catalyst durability

For testing long-term durability, carbon nanotube catalysts prepared from example 1 and comparative example 2 were subjected to hydrogenation of benzene. The results comparing catalyst durability for a long term use were shown in FIG.7.

Hydrogenation of benzene was carried out in liquid phase in a 130ml volume-stainless steel reactor, wherein 5∼10% benzene was dissolved in 15∼20ml of ethanol, and thereto 0.1g of catalyst was added. The reaction was conducted at 90°C and 10 atm, in hydrogen atmosphere with stirring at 300rpm. For durability determination of carbon nanotube catalysts prepared from example 1 and comparative example 2, the above-described hydrogenation process was conducted, provided that the reaction time was differently set such as 12, 24 (1 day), 72 (3 days), 120 (5 days) and 168 (7 days) hours, respectively. Completing the reaction time, each carbon nanotube catalyst was collected, washed with ethanol, dried, and then subjected to the same reaction again. After allowing it to react for 12 hours, benzene conversion rate was determined.

As seen from FIG.7, the carbon nanotube catalyst of example 1 after use of 1 day, 3 days and 7 days shows similar reaction conversion rates. However, it is clearly seen that the carbon nanotube catalyst of comparative example 2 shows significantly decreasing catalyst durability upon reaction time. Further, the reaction conversion rates are shown to be lower than the result of example 1. From these results, it can be understood that durability deterioration in the carbon nanotube catalyst of example 1 hardly occurred as a reaction process, since it was prepared such that metal catalyst nanoparticles were only supported on the inner channel of the carbon nanotube. Most catalysts supported on a carbon support including carbon nanotube form a weak binding with the supported catalyst particles owing to neutral characteristic of the carbon support surface. Accordingly, a considerable amount of catalyst particles are detached from a support during reaction, causing durability deterioration that has been rising as a significant problem in this field. A method for supporting metal catalyst on the inner channel of a carbon nanotube is expected to have various applications, as an important technique to prevent such durability deterioration.

## Claims

1. A method for preparing a carbon nanotube catalyst having metal catalyst nanoparticles supported on the inner channel of the carbon nanotube catalyst, comprising the steps of:
removing carbon impurities from said carbon nanotube by heat treatment, and then removing catalyst components by hydrochloric treatment (step 1);
immersing the hydrochloric acid-treated carbon nanotube in a mixed acid solution and sonicating the resulted solution (step 2);
washing several times the surface of the sonicated carbon nanotube from step 2 with distilled water at room temperature under atmospheric pressure and filtered, leaving the resulting product standing at ambient temperature for 30-360 minutes and subjecting the resulted product to vacuum drying (step 3); and
supporting metal catalyst nanoparticles on the inner channel of the carbon nanotube by CVD, while feeding a flow of metal precursors to the vacuum-dried carbon nanotube (step 4),
wherein the heating process in step 1 for removing carbon impurities from the carbon nanotube catalyst is conducted in an oven heated to 450-550°C under air atmosphere for 30 minutes to 2 hours, and the treatment with hydrochloric acid is carried out by immersing the carbon nanotube in hydrochloric acid (6-10 mol), maintaining it therein for 6-24 hours, then washing with distilled water and drying in an oven at the temperature of 100-120°C for 12 to 24 hours,
wherein the carbon nanotube treated with hydrochloric acid in step 2 is immersed in a mixed acid solution in which 14M nitric acid and 98% sulfuric acid are mixed at the mixing ratio of 1:1 by volume, and sonicated for 3-10 minutes,
wherein the vacuum drying process in the step 3 is performed in an oven at the temperature of 100-120°C for 30 minutes to 2 hours, and
wherein the metal catalyst nanoparticles supported on the carbon nanotube in step 4 include particles of platinum (Pt), ruthenium (Ru), nickel (Ni), cobalt (Co) or molybdenum (Mo), wherein the metal particles are provided in the form of metal precursors so as to be supported on the inner channel of the carbon nanotube, wherein platinum precursors are selected from the group consisting of methyltrimethylcyclopentadienyl-platinum (MeCpPtMe₃), Pt(Me)₃(Cp), Pt(Tfacac)₂, Pt(Me)(CO)(Cp), Pt(Me)₂(COD), [PtMe₃(acac)]₂ (acac; acetylacetonato ligand), PtCl₂(CO)₂, Pt(PF₃)₄, Pt(acac)₂, and Pt(C₂H₄)₃; ruthenium precursors include ruthenium acetylacetonate (Ru(acac)₃) or ruthenium carbonyl (Ru(CO)₅); nickel precursors include nickel nitrate (Ni(NO₃)₂) or nickel carbonyl (Ni(CO)₄); cobalt precursors include Co(CO)₃NO; and molybdenum precursors include Mo(CO)₆.

2. The method for preparing a carbon nanotube catalyst having metal catalyst nanoparticles supported on the inner channel of the carbon nanotube catalyst according to claim 1, wherein the step of supporting the metal particles on the inner channel of the carbon nanotube by a chemical vapor deposition method, while feeding a flow of metal precursors, is carried out by the following steps: placing the vacuum-dried carbon nanotube from the step 3, in the center of a quartz tube and raising the temperature inside the quartz tube to 100∼120°C, while maintaining the pressure at 6∼10 Torr for 30∼120 minutes or more, so as to remove the impurities from the inside of the quartz tube; forming a vacuum condition inside the reactor where the carbon nanotube was placed; and feeding a flow of metal precursors which are in vapor phase by previous heating, to the quartz tube under vacuum condition, thereby supporting metal catalyst nanoparticles on the inner channel surface of the carbon nanotube.

3. The method for preparing a carbon nanotube catalyst having metal catalyst nanoparticles supported on the inner channel of the carbon nanotube catalyst according to claim 2, wherein after forming a vacuum condition inside the reactor where the carbon nanotube was placed, the step of feeding a flow of metal precursors which are in vapor phase by previous heating, to the quartz tube under vacuum condition is repeated so as to increase the amount of metal catalyst nanoparticles being supported on the inner channel surface of the carbon nanotube.

4. A carbon nanotube catalyst having metal catalyst nanoparticles supported only on the inner channel of the carbon nanotube catalyst, wherein said carbon nanotube is obtained by the method according to anyone of claims 1 to 3.

5. The carbon nanotube catalyst having metal catalyst nanoparticles supported only on the inner channel of the carbon nanotube catalyst according to claim 4, wherein the metal catalyst nanoparticles are platinum catalyst nanoparticles, and thus resulting in carbon nanotube catalyst having platinum catalyst nanoparticles supported on the inner channel of the carbon nanotube, for hydrogenation of tetralin or benzene, or oxidation of alcohols.

6. The carbon nanotube catalyst having metal catalyst nanoparticles supported on the inner channel of the carbon nanotube catalyst according to claim 4, wherein the metal catalyst nanoparticles are ruthenium catalyst nanoparticles, and thus resulting in carbon nanotube catalyst having ruthenium catalyst nanoparticles supported on the inner channel of the carbon nanotube, for producing ethanol through hydrogenation of CO.

7. The carbon nanotube catalyst having metal catalyst nanoparticles supported on the inner channel of the carbon nanotube catalyst according to claim 4, wherein the metal catalyst nanoparticles are nickel catalyst nanoparticles, and thus resulting in carbon nanotube catalyst having nickel catalyst nanoparticles supported on the inner channel of the carbon nanotube, for desulfurization, denitrification or demetalization.

8. The carbon nanotube catalyst having metal catalyst nanoparticles supported on the inner channel of the carbon nanotube catalyst according to claim 4, wherein the metal catalyst nanoparticles are molybdenum catalyst nanoparticles, and thus resulting in carbon nanotube catalyst having molybdenum catalyst nanoparticles supported on the inner channel of the carbon nanotube, for desulfurization, denitrification or demetalization.

9. The carbon nanotube catalyst having metal catalyst nanoparticles supported on the inner channel of the carbon nanotube catalyst according to claim 4, wherein the metal catalyst nanoparticles are cobalt catalyst nanoparticles, and thus resulting in carbon nanotube catalyst having cobalt catalyst nanoparticles supported on the inner channel of the carbon nanotube, as a cocatalyst for desulfurization, denitrification and demetalization; a cocatalyst for Pt catalyst for fuel cell; a catalyst for a Fisher-Tropsch reaction; a catalyst for oxidation and partial oxidation of hydrocarbons; a catalyst for reforming reactions; a catalyst for amination of ethanol; and a catalyst for hydrogenation or water gas shift reaction.

## Patentansprüche

1. Verfahren zur Herstellung eines Kohlenstoffnanoröhrenkatalysators mit Metallkatalysator-Nanopartikeln, die auf dem inneren Kanal des Kohlenstoffnanoröhrenkatalysators aufgebracht sind, umfassend die Schritte von:
Entfernen von Kohlenstoffverunreinigungen von der Kohlenstoffnanoröhre durch Wärmebehandlung, und anschließendes Entfernen von Katalysatorkomponenten durch Behandeln mit Salzsäure (Schritt 1);
Eintauchen der mit Salzsäure behandelten Kohlenstoffnanoröhre in eine gemischte Säurelösung und Ultraschallbehandlung der resultierenden Lösung (Schritt 2);
mehrmaliges Waschen der Oberfläche der mit Ultraschall behandelten Kohlenstoffnanoröhre aus Schritt 2 mit destilliertem Wasser bei Raumtemperatur unter atmosphärischem Druck und gefiltert, Stehenlassen des resultierenden Produkts bei Raumtemperatur für 30-360 Minuten und Durchführen von Vakuumtrocknung (Schritt 3) des resultierenden Produkts; und
Aufbringen von Metallkatalysator-Nanopartikeln auf dem inneren Kanal der Kohlenstoffnanoröhre durch CVD, während ein Strom von Metallvorstufen in die vakuumgetrocknete Kohlenstoffnanoröhre eingespeist wird (Schritt 4),
wobei der Wärmeprozess in Schritt 1 zur Entfernung von Kohlenstoffverunreinigungen von dem Kohlenstoffnanoröhrenkatalysator in einem Ofen, der bis 450-550 °C aufgeheizt ist, unter Luftatmosphäre für 30 Minuten bis 2 Stunden durchgeführt wird, und die Behandlung mit Salzsäure durch Eintauchen der Kohlenstoffnanoröhre in Salzsäure (6-10 mol) durchgeführt wird, wobei sie darin für 6-24 h belassen wird, dann mit destilliertem Wasser gewaschen wird und in einem Ofen bei der Temperatur von 100-120 °C für 12 bis 24 Stunden getrocknet wird,
wobei die Kohlenstoffnanoröhre, die mit Salzsäure in Schritt 2 behandelt wird, in eine gemischte Säurelösung, in der 14 M Salpetersäure und 98 % Schwefelsäure in einem Mischungsverhältnis von 1:1 bezogen auf das Volumen gemischt sind, eingetaucht wird, und für 3-10 Minuten mit Ultraschall behandelt wird,
wobei das Vakuumtrocknungsverfahren in dem Schritt 3 in einem Ofen bei einer Temperatur von 100-120 °C für 30 Minuten bis 2 Stunden durchgeführt wird, und
wobei die Metallkatalysator-Nanopartikel, die auf der Kohlenstoffnanoröhre in Schritt 4 aufgebracht werden, Partikel von Platin (Pt), Ruthenium (Ru), Nickel (Ni), Cobalt (Co) oder Molybdän (Mo) umfassen, wobei die Metallpartikel in der Form von Metallvorstufen bereitgestellt werden, um auf dem inneren Kanal der Kohlenstoffnanoröhre aufgebracht zu werden, wobei Platinvorstufen ausgewählt sind aus der Gruppe, bestehend aus Methyltrimethylcyclopentadienylplatin (MeCpPtMe₃), Pt(Me)₃(Cp), Pt(Tfacac)₂, Pt(Me)(CO)(Cp), Pt(Me)₂(COD), [PtMe₃(acac)]₂ (acac; Acetylacetonato-Ligand), PtCl₂(CO)₂, Pt(PF₃)₄, Pt(acac)₂ und Pt(C₂H₄)₃; Rutheniumvorstufen Rutheniumacetylacetonat (Ru(acac)₃) oder Rutheniumcarbonyl (Ru(CO)₅) umfassen; Nickelvorstufen Nickelnitrat (Ni(NO₃)₂) oder Nickelcarbonyl (Ni(CO)₄) umfassen; Kobaltvorstufen Co(CO)₃NO umfassen; und Molybdänvorstufen Mo(CO)₆ umfassen.

2. Verfahren zur Herstellung eines Kohlenstoffnanoröhrenkatalysators mit Metallkatalysator-Nanopartikeln, die auf dem inneren Kanal des Kohlenstoffnanoröhrenkatalysators aufgebracht sind, nach Anspruch 1, wobei der Schritt des Aufbringens der Metallpartikel auf den inneren Kanal der Kohlenstoffnanoröhre durch Chemische Gasphasenabscheidung, während ein Strom von Metallvorstufen eingespeist wird, mittels folgender Schritte durchgeführt wird: Platzieren der vakuumgetrockneten Kohlenstoffnanoröhre von dem Schritt 3 im Zentrum eines Quarzrohrs und Erhöhen der Temperatur innerhalb des Quarzrohrs auf 100∼120 °C, während der Druck bei 6∼10 Torr für 30∼120 Minuten oder mehr gehalten wird, um die Verunreinigungen vom Inneren des Quarzrohrs zu entfernen; Bilden eines Vakuumzustands im Inneren des Reaktors, in den die Kohlenstoffnanoröhre platziert wurde; und Einspeisen eines Stroms von Metallvorstufen, die sich durch vorheriges Erwärmen in der Gasphase befinden, in das Quarzrohr unter Vakuumbedingung, dabei Aufbringen der Metallkatalysator-Nanopartikel auf der Oberfläche des inneren Kanals der Kohlenstoffnanoröhre.

3. Verfahren zur Herstellung eines Kohlenstoffnanoröhrenkatalysators mit Metallkatalysator-Nanopartikeln, die auf dem inneren Kanal des Kohlenstoffnanoröhrenkatalysators aufgebracht sind, nach Anspruch 2, wobei nach Bildung einer Vakuumbedingung im Inneren des Reaktors, in den die Kohlenstoffnanoröhre platziert wurde, der Schritt des Einspeisens eines Stroms von Metallvorstufen wiederholt wird, um die Menge an Metallkatalysator-Nanopartikel, die auf der Oberfläche des inneren Kanals der Kohlenstoffnanoröhre aufgebracht sind, zu erhöhen.

4. Kohlenstoffnanoröhrenkatalysator mit Metallkatalysator-Nanopartikeln, die nur auf dem inneren Kanal des Kohlenstoffnanoröhrenkatalysators aufgebracht sind, wobei die Kohlenstoffnanoröhre durch das Verfahren nach einem der Ansprüche 1 bis 3 erhalten wird.

5. Kohlenstoffnanoröhrenkatalysator mit Metallkatalysator-Nanopartikeln, die nur auf dem inneren Kanal des Kohlenstoffnanoröhrenkatalysators aufgebracht sind, nach Anspruch 4, wobei die Metallkatalysator-Nanopartikel Platin-Katalysator-Nanopartikel sind, und daher in einem Kohlenstoffnanoröhrenkatalysator, der Platin-Katalysator-Nanopartikel aufweist, die auf dem inneren Kanal der Kohlenstoffnanoröhre aufgebracht sind, zur Hydrierung von Tetralin oder Benzol oder zu Oxidation von Alkoholen resultieren.

6. Kohlenstoffnanoröhrenkatalysator mit Metallkatalysator-Nanopartikeln, die auf dem inneren Kanal des Kohlenstoffnanoröhrenkatalysators aufgebracht sind, nach Anspruch 4, wobei die Metallkatalysator-Nanopartikel Ruthenium-Katalysator-Nanopartikel sind, und daher in einem Kohlenstoffnanoröhrenkatalysator, der Ruthenium-Katalysator-Nanopartikel aufweist, die auf dem inneren Kanal der Kohlenstoffnanoröhre aufgebracht sind, zur Herstellung von Ethanol durch Hydrierung von CO resultieren.

7. Kohlenstoffnanoröhrenkatalysator mit Metallkatalysator-Nanopartikeln, die auf dem inneren Kanal des Kohlenstoffnanoröhrenkatalysators aufgebracht sind, nach Anspruch 4, wobei die Metallkatalysator-Nanopartikel Nickel-Katalysator-Nanopartikel sind, und daher in einem Kohlenstoffnanoröhrenkatalysator, der NickelKatalysator-Nanopartikel aufweist, die auf dem inneren Kanal der Kohlenstoffnanoröhre aufgebracht sind, zur Entschwefelung, Denitrifikation oder Demetallierung resultieren.

8. Kohlenstoffnanoröhrenkatalysator mit Metallkatalysator-Nanopartikeln, die auf dem inneren Kanal des Kohlenstoffnanoröhrenkatalysators aufgebracht sind, nach Anspruch 4, wobei die Metallkatalysator-Nanopartikel Molybdän-Katalysator-Nanopartikel sind, und daher in einem Kohlenstoffnanoröhrenkatalysator, der Molybdän-Katalysator-Nanopartikel aufweist, die auf dem inneren Kanal der Kohlenstoffnanoröhre aufgebracht sind, zur Entschwefelung, Denitrifikation oder Demetallierung resultieren.

9. Kohlenstoffnanoröhrenkatalysator mit Metallkatalysator-Nanopartikeln, die auf dem inneren Kanal des Kohlenstoffnanoröhrenkatalysators aufgebracht sind, nach Anspruch 4, wobei die Metallkatalysator-Nanopartikel Cobalt-Katalysator-Nanopartikel sind, und daher in einem Kohlenstoffnanoröhrenkatalysator, der Cobalt-Katalysator-Nanopartikel aufweist, die auf dem inneren Kanal der Kohlenstoffnanoröhre aufgebracht sind, als ein Co-Katalysator zur Entschwefelung, Denitrifikation oder Demetallierung; als ein Co-Katalysator zur Pt Katalyse für eine Brennstoffzelle; als ein Katalysator für eine Fischer-Tropsch-Reaktion; als ein Katalysator zur Oxidation und Teiloxidation von Kohlenwasserstoffen; als ein Katalysator für Reformierung-Reaktionen; als ein Katalysator für Aminierung von Ethanol; und als ein Katalysator zur Hydrierung von einer Wassergas-Shift-Reaktion resultieren.

## Revendications

1. Procédé de préparation d'un catalyseur en nanotube de carbone doté de nanoparticules de catalyseur métalliques supportées sur le canal interne du catalyseur en nanotube de carbone, comprenant les étapes de :
élimination d'impuretés de carbone dudit nanotube de carbone par traitement thermique, et ensuite élimination de composants de catalyseur par traitement chlorhydrique (étape 1) ;
immersion du nanotube de carbone traité à l'acide chlorhydrique dans une solution d'acide mixte et traitement par ultrasons de la solution résultante (étape 2) ;
lavage plusieurs fois de la surface du nanotube de carbone traité par ultrasons de l'étape 2 avec de l'eau distillée à température ambiante sous pression atmosphérique et filtrée, laisser le produit résultant reposer à température ambiante pendant 30 à 360 minutes et soumission du produit résultant à un séchage sous vide (étape 3) ; et support de nanoparticules de catalyseur métalliques sur le canal interne du nanotube de carbone par CVD (Déposition Chimique en Phase Vapeur), tout en apportant un flux de précurseurs métalliques au nanotube de carbone séché sous vide (étape 4),
dans lequel le procédé de chauffage dans l'étape 1 pour l'élimination d'impuretés de carbone du catalyseur en nanotube de carbone est effectué dans un four chauffé à 450 à 550 °C dans une atmosphère d'air pendant 30 minutes à 2 heures, et le traitement à l'acide chlorhydrique est réalisé par immersion du nanotube de carbone dans de l'acide chlorhydrique (6 à 10 mol), son maintien dans celui-ci pendant 6 à 24 heures, ensuite lavage avec de l'eau distillée et séchage dans un four à la température de 100 à 120 °C pendant 12 à 24 heures,
dans lequel le nanotube de carbone traité à l'acide chlorhydrique dans l'étape 2 est immergé dans une solution d'acide mixte dans laquelle de l'acide nitrique 14 M et de l'acide sulfurique à 98 % sont mélangés au rapport de mélange de 1:1 en volume, et traité par ultrasons pendant 3 à 10 minutes,
dans lequel le procédé de séchage sous vide dans l'étape 3 est effectué dans un four à la température de 100 à 120 °C pendant 30 minutes à 2 heures, et
dans lequel les nanoparticules de catalyseur métalliques supportées sur le nanotube de carbone dans l'étape 4 incluent des particules de platine (Pt), ruthénium (Ru), nickel (Ni), cobalt (Co) ou molybdène (Mo), dans lequel les particules métalliques sont fournies sous la forme de précurseurs métalliques de façon à être supportées sur le canal interne du nanotube de carbone, dans lequel des précurseurs de platine sont choisis dans le groupe constitué du méthyltriméthylcyclopentadiényl-platine (MeCpPtMe₃), du Pt(Me)₃(Cp), du Pt(Tfacac)₂, du Pt(Me)(CO)(Cp), du Pt(Me)₂(COD), du [PtMe₃(acac)]₂ (acac ; ligand acétylacétonato), du PtCl₂(CO)₂, du Pt(PF₃)₄, du Pt(acac)₂ et du Pt(C₂H₄)₃ ; les précurseurs de ruthénium incluent l'acétylacétonate de ruthénium (Ru(acac)₃) ou le ruthénium carbonyle (Ru(CO)₅) ; les précurseurs de nickel incluent le nitrate de nickel (Ni(NO₃)₂) ou le nickel carbonyle (Ni(CO)₄) ; les précurseurs de cobalt incluent le Co(CO)₃NO ; et les précurseurs de molybdène incluent le Mo(CO)₆.

2. Procédé de préparation d'un catalyseur en nanotube de carbone doté de nanoparticules de catalyseur métalliques supportées sur le canal interne du catalyseur en nanotube de carbone selon la revendication 1, dans lequel l'étape de support des particules métalliques sur le canal interne du nanotube de carbone par un procédé de dépôt chimique en phase vapeur, tout en apportant un flux de précurseurs métalliques, est réalisée par les étapes suivantes : mise en place du nanotube de carbone séché sous vide de l'étape 3, au centre d'un tube de quartz et élévation de la température à l'intérieur du tube de quartz jusqu'à 100 à 120 °C, tout en maintenant la pression à 6 à 10 Torr pendant 30 à 120 minutes ou plus, de façon à éliminer les impuretés de l'intérieur du tube de quartz ; formation d'une condition de vide à l'intérieur du réacteur où le nanotube de carbone a été placé ; et apport d'un flux de précurseurs métalliques qui sont en phase vapeur par chauffage préalable, au tube de quartz dans une condition de vide, en supportant ainsi les nanoparticules de catalyseur métalliques sur la surface du canal interne du nanotube de carbone.

3. Procédé de préparation d'un catalyseur en nanotube de carbone doté de nanoparticules de catalyseur métalliques supportées sur le canal interne du catalyseur en nanotube de carbone selon la revendication 2, dans lequel après la formation d'une condition de vide à l'intérieur du réacteur où le nanotube de carbone a été placé, l'étape d'apport d'un flux de précurseurs métalliques, qui sont en phase vapeur par chauffage préalable, au tube de quartz dans une condition de vide, est répétée de façon à augmenter la quantité de nanoparticules de catalyseur métalliques étant supportées sur la surface du canal interne du nanotube de carbone.

4. Catalyseur en nanotube de carbone doté de nanoparticules de catalyseur métalliques supportées seulement sur le canal interne du catalyseur en nanotube de carbone, dans lequel ledit nanotube de carbone est obtenu par le procédé selon l'une quelconque des revendications 1 à 3.

5. Catalyseur en nanotube de carbone doté de nanoparticules de catalyseur métalliques supportées seulement sur le canal interne du catalyseur en nanotube de carbone selon la revendication 4, dans lequel les nanoparticules de catalyseur métalliques sont des nanoparticules de catalyseur de platine, et résultant ainsi en un catalyseur en nanotube de carbone ayant des nanoparticules de catalyseur de platine supportées sur le canal interne du nanotube de carbone, pour l'hydrogénation de la tétraline ou du benzène, ou l'oxydation d'alcools.

6. Catalyseur en nanotube de carbone doté de nanoparticules de catalyseur métalliques supportées sur le canal interne du catalyseur en nanotube de carbone selon la revendication 4, dans lequel les nanoparticules de catalyseur métalliques sont des nanoparticules de catalyseur de ruthénium, et résultant ainsi en un catalyseur en nanotube de carbone ayant des nanoparticules de catalyseur de ruthénium supportées sur le canal interne du nanotube de carbone, pour produire de l'éthanol par hydrogénation de CO.

7. Catalyseur en nanotube de carbone doté de nanoparticules de catalyseur métalliques supportées sur le canal interne du catalyseur en nanotube de carbone selon la revendication 4, dans lequel les nanoparticules de catalyseur métalliques sont des nanoparticules de catalyseur de nickel, et résultant ainsi en un catalyseur en nanotube de carbone ayant des nanoparticules de catalyseur de nickel supportées sur le canal interne du nanotube de carbone, pour la désulfurisation, la dénitrification ou la démétallisation.

8. Catalyseur en nanotube de carbone doté de nanoparticules de catalyseur métalliques supportées sur le canal interne du catalyseur en nanotube de carbone selon la revendication 4, dans lequel les nanoparticules de catalyseur métalliques sont des nanoparticules de catalyseur de molybdène, et résultant ainsi en un catalyseur en nanotube de carbone ayant des nanoparticules de catalyseur de molybdène supportées sur le canal interne du nanotube de carbone, pour la désulfurisation, la dénitrification ou la démétallisation.

9. Catalyseur en nanotube de carbone doté de nanoparticules de catalyseur métalliques supportées sur le canal interne du catalyseur en nanotube de carbone selon la revendication 4, dans lequel les nanoparticules de catalyseur métalliques sont des nanoparticules de catalyseur de cobalt, et résultant ainsi en un catalyseur en nanotube de carbone ayant des nanoparticules de catalyseur de cobalt supportées sur le canal interne du nanotube de carbone, en tant que cocatalyseur pour la désulfurisation, la dénitrification et la démétallisation ; un cocatalyseur pour catalyseur de Pt pour pile à combustible ; un catalyseur pour une réaction de Fisher-Tropsch ; un catalyseur pour l'oxydation et l'oxydation partielle d'hydrocarbures ; un catalyseur pour des réactions de reformage ; un catalyseur pour l'amination de l'éthanol ; et un catalyseur pour une hydrogénation ou une conversion à la vapeur d'eau.
